# EUROPEAN PATENT APPLICATION

(11) **EP 4 254 074 A1**
(43) Date of publication of application: **04.10.2023**
(21) Application number: 23164728.0
(22) Date of filing: 28.03.2023
(51) Int. Cl.: G03H 1/22, G02B 17/00, G02B 5/04, G02B 27/00, G02B 30/60, G02B 27/01, G06F 1/16, G06F 3/01, G06F 3/042

(54) **HOLOGRAPHIC PROJECTION OPERATING DEVICE, HOLOGRAPHIC PROJECTION DEVICE AND HOLOGRAPHIC OPTICAL MODULE THEREOF**

(30) Priority: 28.03.2022 TW 111111764
(71) Applicant: WS-HSH International Technology CO., LTD., New Taipei City 235029 (TW)
(72) Inventor: HSU, SHU-CHENG, New Taipei City (TW)
(74) Representative: Lang, Christian

(57) **Abstract**

A holographic projection operating device, holographic projection device and holographic optical module thereof are illustrated. The holographic optical module has a first and a second prism array. The first prism array has a plurality of first prisms with first faces in contact with each other to form a first optical interface. The second prism array has a plurality of second prisms with second faces in contact with each other to form a second optical interface. Light is incident on the first optical interface at a first incident angle to undergo total internal reflection and generate a first reflected ray or at a second incident angle to undergo total internal reflection and generate a second reflected ray. The first or second reflected ray enters the second prism array and hits the second optical interface at a third incident angle to undergo total internal reflection and generate a third reflected ray.

## Description

### BACKGROUND

### TECHNICAL FIELD:

The present disclosure relates to optical projection equipment, and more particularly to a holographic optical module comprising multiple prisms to bend optical paths, a holographic projection device comprising the holographic optical module to generate a holographic image to be viewed by an observer, and a holographic projection operating device comprising the holographic projection device to form an operation interface.

### RELATED ART:

Holographic projection technology enables image-related light rays generated by a display unit to be reflected to thereby alter optical paths of propagation of the light rays, thereby allowing an observer to view a holographic image as soon as the light rays enter the observer's eyes. Holographic projection employs holographic imaging technology so that the holographic image looks more realistic, thereby augmenting a sense of interaction between the holographic image and the observer or user. Thus, holographic projection equipment is recently widely used in various performances.

Light rays reflect off holographic optical elements (HOE) of existing holographic projection devices and then enter the user's eyes, thereby generating a holographic image. The existing holographic optical elements are mirrors with surfaces that are plated and adapted to reflect the light rays. Thus, the existing holographic optical elements require a plating process and material and thereby not only incur higher manufacturing cost but also increase the steps of manufacturing the holographic optical elements.

### SUMMARY

Accordingly, it is an objective of the present disclosure to provide a holographic projection operating device, a holographic projection device and a holographic optical module thereof. The holographic optical module of the present disclosure comprises prisms for reflecting light rays. After entering the prisms, the light rays travel from a more dense medium (i.e., prisms) into a less dense medium (i.e., air) with an incident angle (also known as "angle of incidence") greater than a critical angle to undergo total internal reflection, thereby allowing the reflected light rays to enter a user's eyes from an appropriate angle to generate a holographic image.

In an embodiment of the present disclosure, the holographic optical module comprises a first prism array and a second prism array. The first prism array comprises a plurality of first prisms. Each first prism has a first face. The first faces of every two first prisms are in contact with each other to form a first optical interface. The second prism array comprises a plurality of second prisms. Each second prism has a second face. The second faces of every two second prisms are in contact with each other to form a second optical interface. A light ray enters the first prism array and is incident on the first optical interface at a first incident angle to undergo total internal reflection at the first face of one of the first prisms, thereby turning into a first reflected ray. Another light ray enters the first prism array and is incident on the first optical interface at a second incident angle to undergo total internal reflection at the first face of the other first prism, thereby turning into a second reflected ray. The first reflected ray or the second reflected ray enters the second prism array and is incident on the second optical interface at a third incident angle to undergo total internal reflection at the second face of one of the second prisms, thereby turning into a third reflected ray.

In another embodiment, the first incident angle is greater than or equal to 45 degrees.

In another embodiment, the second incident angle is greater than or equal to 45 degrees.

In another embodiment, an included angle between the third reflected ray and a horizontal line is greater than or equal to 45 degrees but less than or equal to 60 degrees.

In another embodiment, the second prism array is disposed on top of the first prism array such that a third face of one first prism and a fourth face of one second prism are in contact with each other to form a third optical interface which the first or second reflected ray penetrates to enter the second prism array.

In another embodiment, each first prism is a triangular prism and further comprises a fifth face such that each two of the first face, the third face and the fifth face adjoin each other, thereby allowing each first prism to have an included angle of 90 degrees defined between the third face and the fifth face, an included angle of 45 degrees defined between the first face and the third face, and an included angle of 45 degrees defined between the first face and the fifth face.

In another embodiment, each second prism is a triangular prism and further comprises a sixth face such that each of two the second face, the fourth face and the sixth face adjoin each other, thereby allowing each second prism to have an included angle of 90 degrees defined between the fourth face and the sixth face, an included angle of 60 to 65 degrees defined between the second face and the fourth face, and an included angle of 25 to 30 degrees defined between the second face and the sixth face.

In another embodiment, each second prism is a triangular prism and further comprises a sixth face such that each two of the second face, the fourth face and the sixth face adjoin each other, thereby allowing each second prism to have an included angle of 90 degrees defined between the fourth face and the sixth face, an included angle of 25 to 30 degrees defined between the second face and the fourth face, and an included angle of 60 to 65 degrees defined between the second face and the sixth face.

The present disclosure provides a holographic projection device comprising a display module and a holographic optical module. The display module emits light rays to form an image. The holographic optical module bends optical paths of the light rays to allow the light rays to travel in a viewing direction and thereby enter an observer's eyes, thereby generating a holographic image visually.

In another embodiment, the holographic projection device further comprises an image enlargement module which the light rays pass through to allow the image to be enlarged before entering the holographic optical module.

In another embodiment, the image enlargement module comprises a Fresnel lens, and the light rays pass through the Fresnel lens.

In another embodiment, the holographic projection device further comprises an optical path adjustment module such that the light rays sequentially pass through the image enlargement module and the optical path adjustment module, thereby allowing the light rays to be focused on a position of the holographic optical module before entering the holographic optical module.

In another embodiment, the optical path adjustment module comprises a plurality of optical microstructures arranged in a two-dimensional pattern.

In another embodiment, the optical microstructures are convex lens of equal or unequal size.

The present disclosure provides a holographic projection operating device comprising the holographic projection device, a signal emitter, a signal receiver and a processor. The signal emitter continuously emits a detection signal. The detection signal and at least one of the light rays forming the image synchronously pass through the holographic optical module and thereby travel in the viewing direction. The signal receiver continuously receives the detection signal in the viewing direction. The processor connects to the signal receiver. When the signal receiver receives the detection signal, the detection signal is continuously sent to the processor. If the processor does not receive the detection signal, the processor will generate a control signal.

To sum up, the holographic projection device provided by the present disclosure comprises a first prism array and a second prism array and allows light rays for forming an image to be incident on a first optical interface and a second optical interface at an appropriate angle so that the light rays undergo total internal reflection at the first optical interface and the second optical interface, thereby allowing the light rays to travel along a specific optical path to enter the observer's or user's eyes and generate a holographic image visually.

### DESCRIPTIONS OF DRAWINGS

FIG. 1 is a perspective view of a holographic optical module comprising a first prism array and a second prism array in contact therewith according to an embodiment of the present disclosure.
FIG. 2 is an exploded view of the holographic optical module of FIG. 1.
FIG. 3A is a front view of the holographic optical module, with an included angle of 45 degrees defined between a third reflected ray and a plane on which a display module lies, according to an embodiment of the present disclosure.
FIG. 3B is a front view of the holographic optical module, with an included angle of 30 degrees defined between the third reflected ray and the plane on which the display module lies, according to another embodiment of the present disclosure.
FIG. 3C is a front view of the holographic optical module according to yet another embodiment of the present disclosure.
FIG. 4 is a perspective view of the holographic optical module according to an embodiment of the present disclosure, depicting its three-dimensional structure.
FIG. 5 is a cross-sectional view of a holographic projection device according to an embodiment of the present disclosure.
FIG. 6 is a cross-sectional view of the holographic projection device according to another embodiment of the present disclosure.
FIG. 7 is a cross-sectional view of a holographic projection operating device according to an embodiment of the present disclosure.

### DESCRIPTIONS OF EXEMPLARY EMBODIMENTS

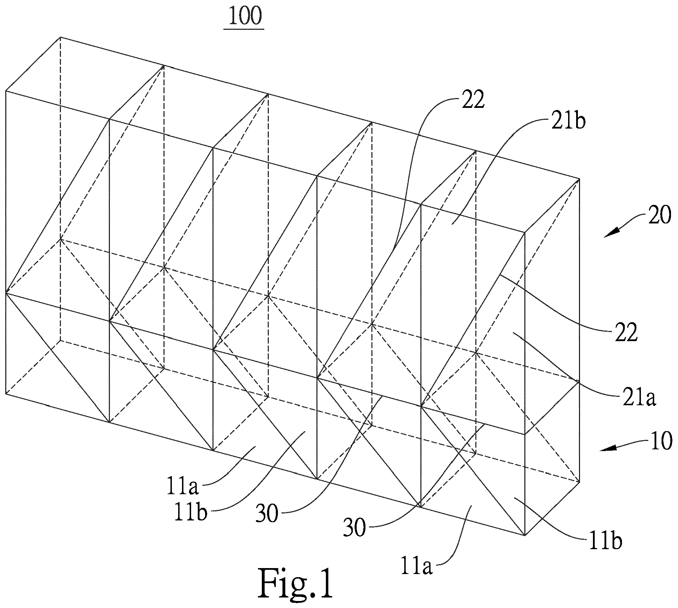

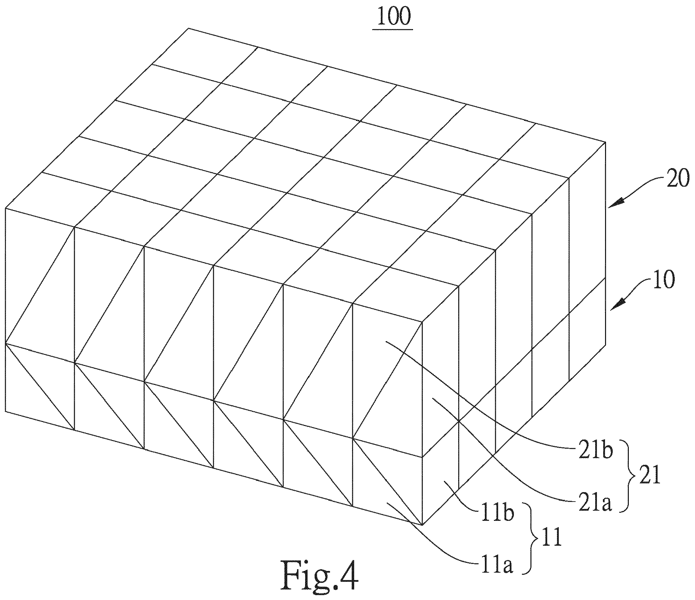

Referring to FIG. 1, FIG. 2, FIG. 3A and FIG. 4, there are shown a holographic optical module 100 according to an embodiment of the present disclosure. In this embodiment, the holographic optical module 100 comprises a first prism array 10 and a second prism array 20. The first prism array 10 and second prism array 20 are each formed in an acrylic substrate by a pressing process.

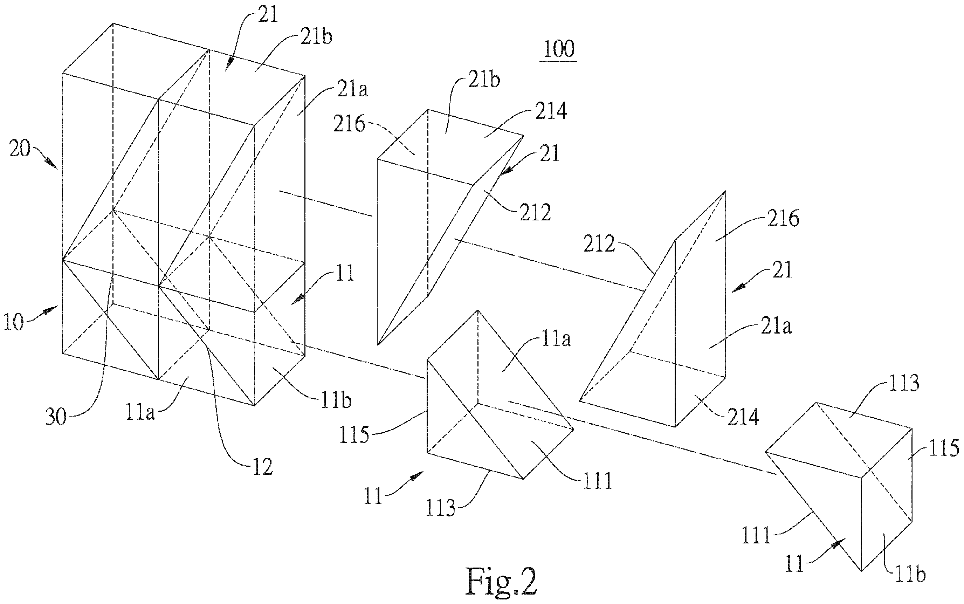

As shown in FIG. 1 and FIG. 2, the first prism array 10 comprises a plurality of first prisms 11, and the each two corresponding first prisms 11 comprise a first prism 11a with a leg in a lower part of the first prism array 10 and a first prism 11b with a leg in an upper part of the first prism array 10. In this embodiment, each first prism 11 is a triangular prism and comprises a first face 111, a third face 113 and a fifth face 115. Each two of the first face 111, third face 113 and fifth face 115 adjoin each other to form a micro structure of a triangular prism with a triangular cross section. The first face 111 is the hypotenuse of a triangle. The third face 113 and fifth face 115 are the legs of the triangle. Each first prism 11 has an included angle of 90 degrees defined between the third face 113 and fifth face 115, an included angle of 45 degrees defined between the first face 111 and third face 113, and an included angle of 45 degrees defined between the first face 111 and fifth face 115. The first prism 11a with the leg in the lower part of the first prism array 10 and first prism 11b with the leg in the upper part of the first prism array 10 are of the same structure. The first face 111 of the first prism 11a with the leg in the lower part of the first prism array 10 and the first face 111 of the first prism 11b with the leg in the upper part of the first prism array 10 are in contact with each other to form a first optical interface 12. The first face 111 of the first prism 11a with the leg in the lower part of the first prism array 10 and the first face 111 of the first prism 11b with the leg in the upper part of the first prism array 10 are in airtight contact with each other.

As shown in FIG. 1, FIG. 2 and FIG. 3, the second prism array 20 comprises a plurality of second prisms 21, and the each two corresponding second prism 21 comprises a second prism 21a with a leg in a lower part of the second prism array 20 and a second prism 21b with a leg in an upper part of the second prism array 20. In this embodiment, each second prism 11 is a triangular prism and comprises a second face 212, a fourth face 214 and a sixth face 216. Each two of the second face 212, fourth face 214 and sixth face 216 adjoin each other to form a micro structure of a triangular prism with a triangular cross section. The second face 212 is the hypotenuse of a triangle. The fourth face 214 and sixth face 216 are the legs of the triangle. Each second prism 21 has an included angle of 90 degrees defined between the fourth face 214 and sixth face 216, an included angle of 61 degrees defined between the second face 212 and fourth face 214, and an included angle of 29 degrees defined between the second face 212 and sixth face 216. The second prism 21a with the leg in the lower part of the of the second prism array 20 and second prism 21b with the leg in the upper part of the second prism array 20 are of the same structure. The second face 212 of the second prism 21a with the leg in the lower part of the second prism array 20 and the second face 212 of the second prism 21b with the leg in the upper part of the second prism array 20 are in contact with each other to form a second optical interface 22. The second face 212 of the second prism 21a with the leg in the upper part of the second prism array 20 and the second face 212 of the second prism 21b with the leg in the upper part of the second prism array 20 are in airtight contact with each other.

The fourth face 214 of the second prism 21a with the leg in the lower part of the second prism array 20 and the third face 113 of the first prism 11b with the leg in the upper part of the first prism array 10 are in contact with each other to form a third optical interface 30.

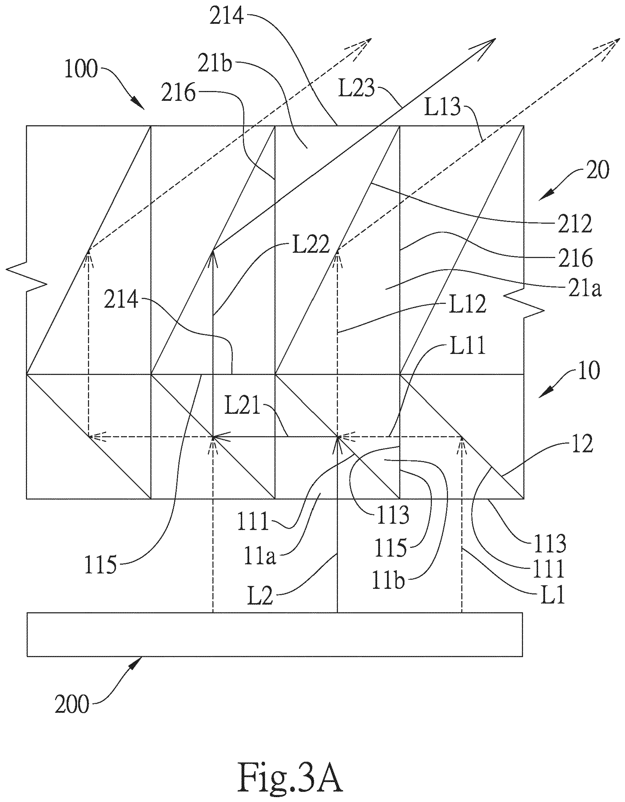

As shown in FIG. 3A, light ray L1 from a display module 200 or a single light source is incident on the third face 113 of the first prism 11a with the leg in the lower part of the first prism array 10 to enter the first prism array 10. With the light ray L1 being incident perpendicularly on the third face 113, a portion of the light ray L1 reflects off the third face 113, but the remaining portion of the light ray L1 penetrates the third face 113 to enter the first prism 11a with the leg in the lower part of the first prism array 10 before being incident on the first optical interface 12 at the first incident angle, wherein the first optical interface 12 is the face on which the first face 111 of first prism 11a the leg in the lower part of the first prism array 10 is located. As mentioned above, both the first prism 11 and second prism 21 are made of an acrylic material, and the acrylic material has a refractive index of around 1.49. As mentioned above, light rays traveling from a more dense medium (i.e., a prism) into a less dense medium undergo total internal reflection. Under Snell's law, a law of refraction expressed by the formula n₁sinθ₁=n₂sinθ₂, n₁ denotes the refractive index (the acrylic material has a refractive index of 1.49) of the first prism 11a, and n₂ denotes the refractive index (1.000027≒1) of air, wherein θ₂ is equal to 90 degrees when total internal reflection occurs. Thus, by substituting the abovementioned into the Snell's law formula, the critical incident angle θ₁ at which the light rays are incident on the first face 111 to undergo total internal reflection is calculated to be equal to 42.1 degrees. In this embodiment, the light ray L1 is incident on the first face 111 at the first incident angle of 45 degrees, which is greater than the critical incident angle of 42.1 degrees. Thus, the light ray L1 undergoes total internal reflection at the first face 111 to turn into first reflected ray L11. Then, the first reflected ray L11 travels in a direction parallel to the first face 111 to enter another adjacent first prism 11b with a leg in the upper part of the first prism array 10. In this embodiment, the first reflected ray L11 enters the first prism 11b with the leg in the left and upper part of the first prism array 10, but the present disclosure is not limited thereto. An inclination direction of the first face 111 in another embodiment is opposite to an inclination direction of the first face 111 in this embodiment, and thus the first reflected ray L11 in the other embodiment enters the first prism 1 1b with the leg in the right and upper part of the first prism array 10

The first reflected ray L11 is incident on the first optical interface 12, i.e., the first face 111 of the first prism 11b with the leg in the upper part of the first prism array 10, at the second incident angle of 45 degrees. Similarly, with the second incident angle being greater than the critical incident angle for total internal reflection, the first reflected ray L11 reflects off the first face 111 of first prism 11b with the leg in the upper part of the first prism array 10 once again to turn into a second reflected ray L12. After that, the second reflected ray L12 penetrates the third optical interface 30 formed by the third face 113 of the first prism 11b and the fourth face 214 of the second prism 21a with the leg in the lower part of the second prism array 20 and then is incident on the second face 212 (at the second optical interface 22) at the third incident angle of 61 degrees to undergo total internal reflection at the second face 212, thereby turning into a third reflected ray L13. In this embodiment, the included angle between the third reflected ray L13 and the fourth face 214 of the second prism 21b with the leg in the upper part of the second prism array 20 is 30 degrees.

Another light ray L2 emitted from the display module 200 leaves the third face 113 of another one first prism 11a with the leg in the lower part of the first prism array 10 and enters first prism array 10 before reflecting off the first optical interface 12, i.e., the first face 111 of the first prism 11a with the leg in the lower part of the first prism array 10, to turn into a first reflected ray L21. Similarly, the first reflected ray L21 enters the adjacent first prism 11b with the leg in the upper part of the first prism array 10 and reflects off the first optical interface 12, i.e., the first face 111 of first prism 11b with the leg in the upper part of the first prism array 10, to turn into a second reflected ray L22. After that, the second reflected ray L22 enters the second prism 21a with the leg in the lower part of the second prism array 20 and reflects off the second optical interface 22, i.e., the second face 212 of the second prism 21a with the leg in the lower part of the second prism array 20, to turn into a third reflected ray L23. Similarly, the included angle between the third reflected ray L23 and the fourth face 214 of the second prism 21b with the leg in the upper part of the second prism array 20 is 30 degrees.

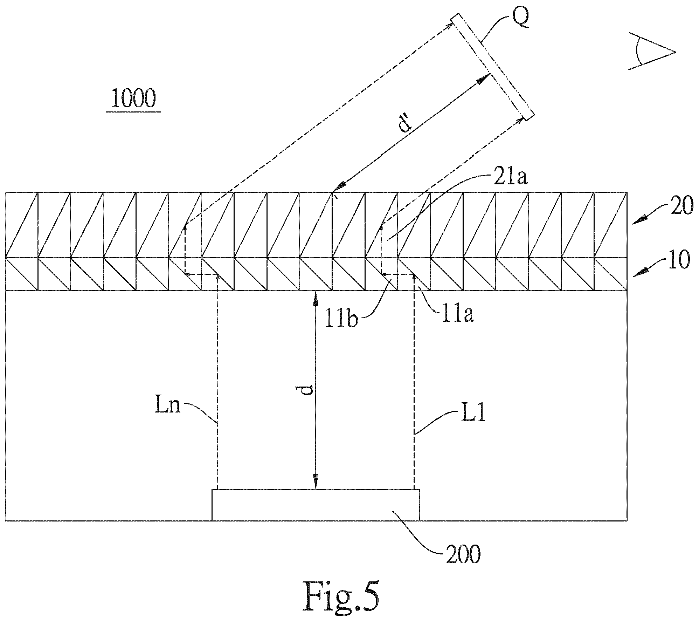

Referring to FIG. 5, there is shown a cross-sectional view of a holographic projection device 1000 according to an embodiment of the present disclosure. The holographic projection device 1000 in this embodiment comprises a holographic optical module 100 and a display module 200. Light rays L1-Ln, which are emitted from the display module 200 on a horizontal plane and adapted to form an image, enter the holographic optical module 100. Then, the holographic optical module 100 bends optical paths of the light rays to allow the light rays to enter an observer's or user's eyes at an inclination angle (an included angle of 30 degrees between the third reflected ray L23 and the fourth face 214 horizontally positioned), i.e., in a viewing direction. When the observer's or user's eyes perceive the third reflected ray L23, a holographic image Q is visible to the observer's or user's eyes and similar to a projected image that originates from an image generated by the display module 200 in an inclination direction of 30 degrees.

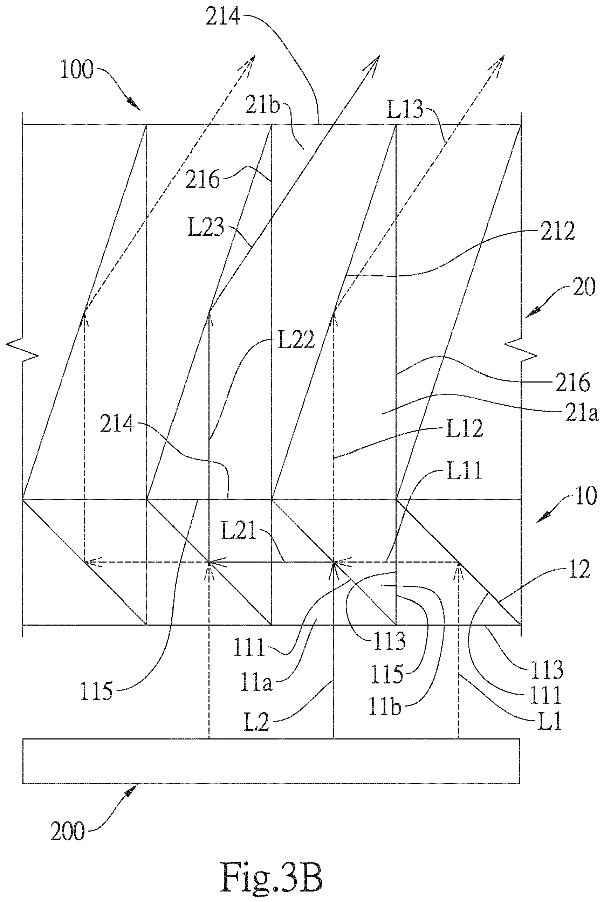

Referring to FIG. 3B, there is shown a front view of the holographic optical module according to another embodiment of the present disclosure. Unlike the embodiment illustrated by FIG. 3A, this embodiment is characterized by an included angle of 63.4 degrees defined between the second face 212 and fourth face 214 of the second prisms 21a, 21b, an included angle of 26.6 degrees defined between the second face 212 and sixth face 216 of the second prisms 21a, 21b, and an included angle of 45 degrees defined between the fourth face 214 and the third reflected rays L13 and L23.

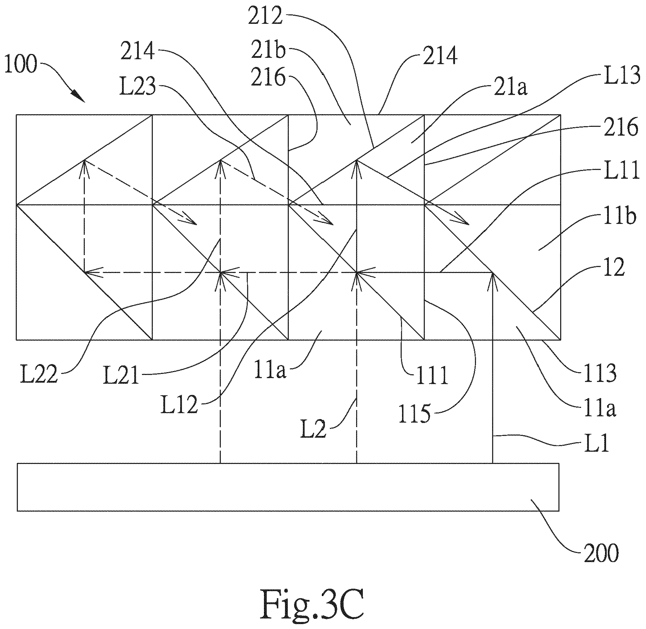

Referring to FIG. 3C, there is shown a front view of the holographic optical module according to yet another embodiment of the present disclosure. Unlike the embodiment illustrated by FIG. 3A, this embodiment is characterized by an included angle of 30 degrees defined between the second face 212 and fourth face 214 of the second prisms 21a, 21b, and an included angle of 60 degrees defined between the second face 212 and sixth face 216 of the second prisms 21a, 21b. Thus, the third reflected rays L13 and L23 travel in the direction toward the first prism array 10. This embodiment is applicable to the generation of a holographic image when the third reflected rays L13 and L23 travel downward to enter the user's eyes while the holographic optical module 100 is located at a position higher than the user.

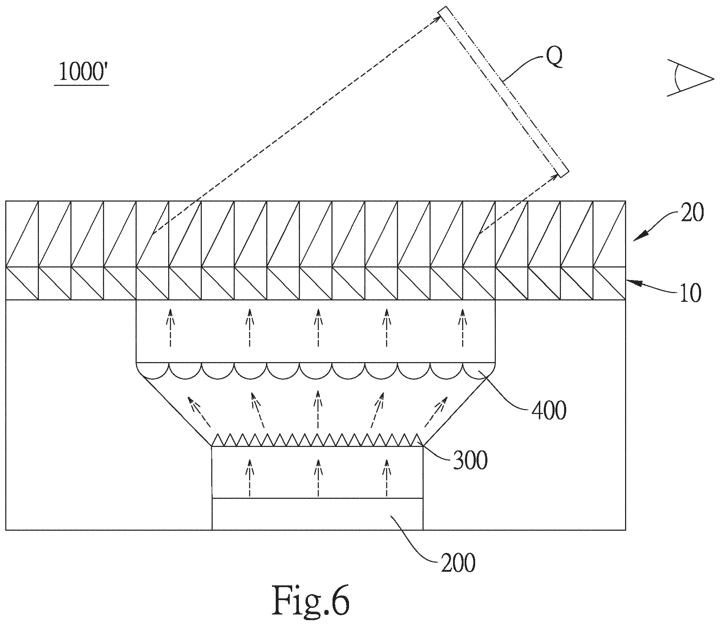

Referring to FIG. 6, there is shown a cross-sectional view of a holographic projection device 1000' according to another embodiment of the present disclosure. The holographic projection device 1000' in this embodiment comprises the holographic optical module 100, the display module 200 and an image enlargement module 300. The image enlargement module 300 comprises a Fresnel lens. The light rays L1-Ln pass through the Fresnel lens to enable the enlargement of images generated by the display module 200; thus, the display module 200 of a relatively small size works well. In this embodiment, the holographic projection device 1000' further comprises an optical path adjustment module 400 so that the light rays L1-Ln sequentially pass through the image enlargement module 300 and optical path adjustment module 400, thereby allowing the light rays L1-Ln to be focused on the position of the holographic optical module 100 before entering the holographic optical module 100. The optical path adjustment module 400 converges the light rays being diffused to concentrate the light rays toward the middle of the light rays, and comprises a plurality of optical microstructures (not shown in drawings). The optical microstructures (not shown in drawings) can be a microconvex lens array or a microtriangular prism array, and the present disclosure is not limited thereto.

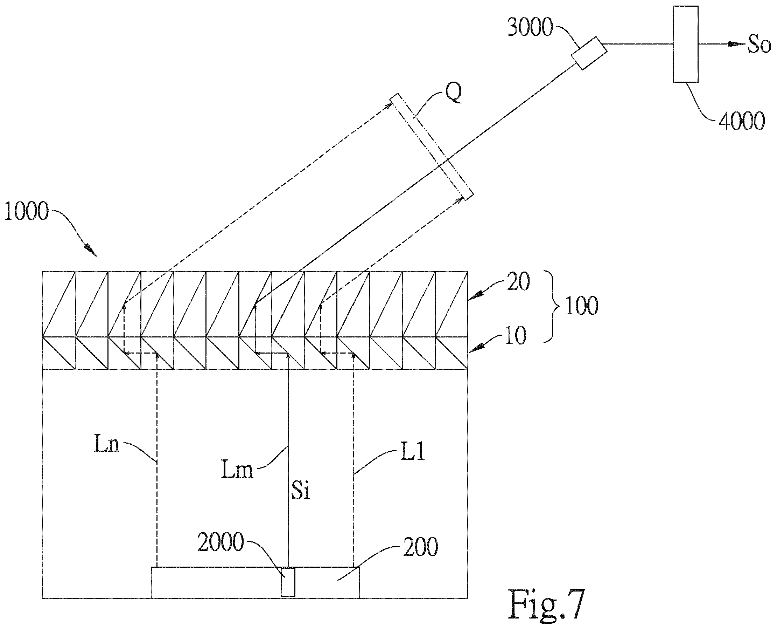

Referring to FIG. 7, there is shown a cross-sectional view of a holographic projection operating device according to an embodiment of the present disclosure. The holographic projection operating device in this embodiment comprises the holographic projection device 1000 or 1000', a signal emitter 2000, a signal receiver 3000 and a processor 4000. The signal emitter 2000 continuously emits a detection signal Si. The detection signal Si and at least one of the light rays forming the image, e.q., the light ray Lm, synchronously pass through the holographic optical module 100 and thereby travel in the viewing direction. The signal receiver 3000 continuously receives the detection signal Si in the viewing direction. The processor 4000 connects to the signal receiver 3000; thus, when the signal receiver 3000 receives the detection signal Si, the detection signal Si is continuously sent to the processor 4000. If the processor 4000 does not receive the detection signal Si, the processor 4000 will generate a control signal So. In this embodiment, the holographic projection operating device is applicable to various operating equipment and uses a holographic image as an operation interface, such as the keyboard of a computer or the operating buttons of an elevator. The holographic projection device 1000 or 1000' generates an image of a holographic operation interface, and the path of propagation of the detection signal Si corresponds in position to the image of the button of the operation interface. When the user's hand presses the holographic button image, the hand blocks the detection signal Si to thereby prevent the processor 4000 from receiving the detection signal Si. Thus, the processor 4000 generates the control signal So corresponding to the operation of the button to control the operation of the equipment.

A holographic projection device of the present disclosure comprises a first prism array and a second prism array and allows light rays for forming an image to be incident on a first optical interface and a second optical interface an appropriate angles so that the light rays undergo total internal reflection at the first optical interface and the second optical interface, thereby allowing the light rays to travel along a specific optical path to enter the observer's or user's eyes and generate a holographic image visually.

Although particular embodiments of the present disclosure have been described in detail for purposes of illustration, various modifications and enhancements may be made without departing from the spirit and scope of the present disclosure. Accordingly, the present disclosure is not to be limited except as by the appended claims. Furthermore, it is not necessary for the claims or any embodiments of the present disclosure to achieve all the objectives, advantages or features disclosed in the present disclosure. Moreover, the abstract and the title of the invention serve to assist with a patent search but are not intended to limit the scope of the claims of the present disclosure. In addition, ordinal numbers, such as "first" and "second," used herein are intended to distinguish or correlate identical or similar elements or distinguish an embodiment from another embodiment but are not intended to define the upper and lower limits of a range of number of the elements.

## Claims

1. A holographic optical module, adapted for use in a holographic projection device (1000, 1000'), the holographic optical module (100) comprising:
a first prism array (10) comprising a plurality of first prisms (11, 11a, 1 1b), each of the first prisms (11, 11a, 1 1b) having a first face (111), wherein the first faces (111) of every two of the first prisms (11, 11a, 1 1b) are in contact with each other to form a first optical interface (12); and
a second prism array (20) comprising a plurality of second prisms (21, 21a, 21b), each of the second prisms (21, 21a, 21b) having a second face (212), wherein the second faces (212) of every two of the second prisms (21, 21a, 21b) are in contact with each other to form a second optical interface (22),
wherein a light ray (L2) enters the first prism array (10) and is incident on the first optical interface (12) at a first incident angle to undergo total internal reflection at the first face (111) of one of the first prisms (11a), thereby turning into a first reflected ray (L21),
wherein another light ray (L11) enters the first prism array (10) and is incident on the first optical interface (12) at a second incident angle to undergo total internal reflection at the first face (111) of the other first prism (11b), thereby turning into a second reflected ray (L12),
wherein the second reflected ray (L12) enters the second prism array (20) and is incident on the second optical interface (22) at a third incident angle to undergo total internal reflection at the second face (212) of one of the second prisms (21a), thereby turning into a third reflected ray (L13).

2. The holographic optical module of claim 1, wherein the first reflected ray (L21) enters other two adjoining first prisms (11a, 11b) of the first prism array (10), and the other two adjoining first prisms (11a, 11b) are in contact with each other.

3. The holographic optical module of claim 1, wherein the first incident angle is greater than or equal to 45 degrees.

4. The holographic optical module of claim 1, wherein the second incident angle is greater than or equal to 45 degrees.

5. The holographic optical module of claim 1, wherein an included angle between the third reflected ray and a fourth face (214) of each of the second prisms (21) is greater than or equal to 30 degrees but less than or equal to 45 degrees.

6. The holographic optical module of claim 1, wherein the second prism array (20) is disposed on top of the first prism array (10) such that a third face (113) of one of the first prisms (11b) and a fourth face (214) of one of the second prisms (21a) are in contact with each other to form a third optical interface (30) which the second reflected ray (L12) penetrates to enter the second prism array (20).

7. The holographic optical module of claim 6, wherein each of the first prisms (11, 11a, 11b) is a triangular prism and further comprises a fifth face (115) such that each two of the first face (111), the third face (113) and the fifth face (115) adjoin each other, thereby allowing each of the first prisms (11, 11a, 11b) to have an included angle of 90 degrees defined between the third face (113) and the fifth face (115), an included angle of 45 degrees defined between the first face (111) and the third face (113), and an included angle of 45 degrees defined between the first face (111) and the fifth face (115).

8. The holographic optical module of claim 6, wherein each of the second prisms (21, 21a, 21b) is a triangular prism and further comprises a sixth face (216) such that each two of the second face (212), the fourth face (214) and the sixth face (216) adjoin each other, thereby allowing each of the second prisms (21, 21a, 21b) to have an included angle of 90 degrees defined between the fourth face (214) and the sixth face (216), an included angle of 60 to 65 degrees defined between the second face (212) and the fourth face (214), and an included angle of 25 to 30 degrees defined between the second face (212) and the sixth face (216).

9. The holographic optical module of claim 7, wherein each of the second prisms (21, 21a, 21b) is a triangular prism and further comprises a sixth face (216) such that each two of the second face (212), the fourth face (214) and the sixth face (216) adjoin each other, thereby allowing each of the second prisms (21, 21a, 21b) to have an included angle of 90 degrees defined between the fourth face (214) and the sixth face (216), an included angle of 60 to 65 degrees defined between the second face (212) and the fourth face (214), and an included angle of 25 to 30 degrees defined between the second face (212) and the sixth face (216).

10. The holographic optical module of claim 7, wherein each of the second prisms (21, 21a, 21b) is a triangular prism and further comprises a sixth face (216) such that the second face (212), the fourth face (214) and the sixth face (216) adjoin each other, thereby allowing each of the second prisms (21, 21a, 21b) to have an included angle of 90 degrees defined between the fourth face (214) and the sixth face (216), an included angle of 25 to 30 degrees defined between the second face (212) and the fourth face (214), and an included angle of 60 to 65 degrees defined between the second face (212) and the sixth face (216).

11. The holographic optical module of claim 7, wherein each of the second prisms (21, 21a, 21b) is a triangular prism and further comprises a sixth face (216) such that the second face (212), the fourth face (214) and the sixth face (216) adjoin each other, thereby allowing each of the second prisms (21, 21a, 21b) to have an included angle of 90 degrees defined between the fourth face (214) and the sixth face (216), an included angle of 25 to 30 degrees defined between the second face (212) and the fourth face (214), and an included angle of 60 to 65 degrees defined between the second face (212) and the sixth face (216).

12. A holographic projection device, comprising:
a display module (200) for emitting light rays to form an image; and
a holographic optical module (100) of claim 1,
wherein the holographic optical module (100) bends optical paths of the light rays to allow the light rays to travel in a viewing direction and thereby enter an observer's eyes, thereby generating a holographic image (Q) visually.

13. The holographic projection device of claim 12, further comprising an image enlargement module (300) which the light rays pass through to allow the image to be enlarged before entering the holographic optical module (100).

14. The holographic projection device of claim 13, wherein the image enlargement module (300) comprises a Fresnel lens, and the light rays pass through the Fresnel lens.

15. The holographic projection device of claim 13, further comprising an optical path adjustment module (400) such that the light rays sequentially pass through the image enlargement module (300) and the optical path adjustment module (400), thereby allowing the light rays to be focused on a position of the holographic optical module (100) before entering the holographic optical module (100).

16. The holographic projection device of claim 13, wherein the optical path adjustment module (400) comprises a plurality of optical microstructures arranged in a two-dimensional pattern.

17. The holographic projection device of claim 14, wherein the optical microstructures are convex lens of equal or unequal size.

18. A holographic projection operating device, comprising:
the holographic projection device (1000, 1000') of claim 12;
a signal emitter (2000) for continuously emitting a detection signal (Si), wherein the detection signal (Si) and at least one of the light rays forming the image synchronously pass through the holographic optical module (100) and thereby travel in the viewing direction;
a signal receiver (3000) for continuously receiving the detection signal (Si) in the viewing direction; and
a processor (4000) connected to the signal receiver (3000), wherein when the signal receiver (3000) receives the detection signal (Si), the detection signal (Si) is continuously sent to the processor (4000),
wherein if the processor (4000) does not receive the detection signal (Si), the processor (4000) will generate a control signal (So).
